# EUROPÄISCHE PATENTSCHRIFT

(11) **EP 2 818 255 B1**
(45) Veröffentlichungstag und Bekanntmachung des Hinweises auf die Patenterteilung: **07.12.2016**
(21) Anmeldenummer: 14182316.1
(22) Anmeldetag: 26.07.2010
(51) Int. Cl.: B08B 7/02, B08B 9/08, B29B 17/02, B29K 67/00, B29K 105/06, B29L 31/00, B29L 31/56

(54) **VERFAHREN UND VORRICHTUNG ZUR VORREINIGUNG VON TEILEN AUS KUNSTSTOFF**
METHOD AND DEVICE FOR PRE-CLEANING PARTS MADE OF PLASTIC
PROCÉDÉ ET DISPOSITIF DE PRÉ-NETTOYAGE DE PIÈCES EN MATIÈRE PLASTIQUE

(30) Priorität: 27.07.2009 DE 102009034899
(43) Veröffentlichungstag der Anmeldung: 31.12.2014
(62) Teilanmeldung aus: 10754664.0
(73) Patentinhaber: HERBOLD MECKESHEIM GMBH, 74909 Meckesheim (DE)
(72) Erfinder: Herbold, Karlheinz, 68535 Edingen (DE)
(74) Vertreter: Patent- und Rechtsanwälte Ullrich & Naumann

(56) Entgegenhaltungen:
- WO-A1-2009/033587
- DE-A1- 10 308 500
- US-A- 4 599 131

## Beschreibung

Die Erfindung betrifft ein Verfahren zur Vorreinigung von Teilen aus Kunststoff im Rahmen eines Recycling-Prozesses, wobei an den Teilen zu entfernende Fremdkörper anhaften, insbesondere zum Entfernen von Fremdkörpern an Teilen aus Kunststoff, vorzugsweise zum Entfernen von Etiketten, Verschmutzungen, etc. an gebrauchten Kunststoffflaschen, beispielsweise PET-Flaschen.
Des Weiteren betrifft die Erfindung eine Vorrichtung zur Anwendung des erfindungsgemäßen Verfahrens.

Vorrichtungen und Verfahren der eingangs genannte Art sind aus den Druckschriften DE10308500A1, WO2009/033587A1 und US1599131 A bekannt.

Aus der Praxis sind Anlagen und Verfahren zum Aufbereiten von Kunststoffabfällen (z.B. PET-Flaschen) bekannt. Dabei werden Verschmutzungen entfernt, wobei die Kunststoffabfälle regelmäßig einer Nasswäsche unterzogen werden.

Oft ist sogar eine Heißwäsche erforderlich, und zwar unter Zugabe von Reinigungschemikalien, beispielsweise Natronlauge, NaOH, etc. Dabei wird das Waschmedium ständig regeneriert, was zu einem hohen Aufwand und zu erheblichen Umweltverschmutzungen führt, würde man das Waschmedium nach vollzogener Wäsche ins Abwasser geben.

Ein besonderes Problem sind Verunreinigungen bzw. Fremdkörper an Kunststoffflaschen, beispielsweise an sogenannten PET-Flaschen. Zum Recyceln der PET-Flaschen müssen die Etiketten - bestehend aus anderem Material wie die Flasche und meist bedruckt - entfernt werden. Sie bestehen oftmals aus PVC und sind in einer konventionellen Waschanlage schwer entfernbar. Oftmals haften an den PET-Flaschen zudem sonstige Fremdkörper wie Steine, Glas, kleine Metallstücke, etc., die von einem Überbandmagneten nicht erfasst werden. Auch diese Fremdkörper sind von dem zu recycelnden Kunststoff zu entfernen.

Des Weiteren ist von Bedeutung, dass es sich bei den an den PET-Flaschen haftenden Fremdkörpern oftmals um abrasive Bestandteile handelt. Werden diese vor dem Zerkleinern bzw. Zermahlen der PET-Flaschen nicht entfernt, bedeutet dies einen erheblichen Verschleiß an der Mühle. Des Weiteren sind Restinhalte aus den Flaschen zu entfernen, da nämlich das klebrige Zuckerwasser zu Störungen bei der Weiterverarbeitung bzw. beim Recycling führt. Außerdem wird durch Restflüssigkeit in den Flaschen die Abwasseraufbereitung belastet.

Der vorliegenden Erfindung liegt daher die Aufgabe zugrunde, ein Verfahren und eine Vorrichtung zur Vorreinigung von Teilen aus Kunststoff im Rahmen eines Recycling-Prozesses anzugeben, wodurch Kunststoffrecycling problemlos möglich ist. Die Kontamination des Wasserkreislaufs soll auf ein Minimum reduziert werden.

Erfindungsgemäß ist die voranstehende Aufgabe - in Bezug auf das Verfahren - durch die Merkmale des Patentanspruchs 1 gelöst. Danach ist das gattungsbildende Verfahren dadurch gekennzeichnet, dass die Fremdkörper durch mechanische Beanspruchung der Teile von diesen entfernt werden.

In Bezug auf die erfindungsgemäße Vorrichtung ist die voranstehende Aufgabe durch die Merkmale des nebengeordneten Patentanspruchs 14 gelöst. Danach ist die gattungsbildende Vorrichtung gekennzeichnet durch ein Gehäuse mit einer Kammer zur Aufnahme der Teile, wobei in der Kammer Mittel zur mechanischen Beaufschlagung der Teile sowie Mittel zum Trennen der von den Teilen losgelösten Fremdkörper sowie zum Abführen der Fremdkörper und Teile auf separaten Pfaden vorgesehen sind.

Erfindungsgemäß ist erkannt worden, dass es ohne Weiteres möglich ist, die an den zu recycelnden Kunststoffteilen anhaftenden Fremdkörper auf einfache Weise durch mechanische Beanspruchung der Teile von diesen zu entfernen. Erfolgt die Beanspruchung auf rein mechanische Weise, ist eine Vorwäsche mit Dampf, welche äußerst energieaufwendig ist, nicht erforderlich. Des Weiteren ist für das erfindungsgemäße Verfahren wesentlich, dass das Entfernen der Fremdkörper ohne vorherige Zerkleinerung der Teile bzw. PET-Flaschen erfolgt. Entsprechend wird die Mühle nicht durch abrasive Fremdkörper beansprucht. Ganz im Gegenteil werden nach dem erfindungsgemäßen Verfahren die aus Kunststoff bestehenden Teile - ohne vorgeschaltete Zerkleinerung - mechanisch derart beansprucht, dass sich die Fremdkörper, ganz gleich welcher Art, von den Kunststoffteilen lösen.

Durch die Bewegung der Kunststoffteile innerhalb der Vorrichtung kommt es zu einer Friktionsbildung (Reibung) der Kunststoffteile aneinander und an den Maschinenteilen, welche ebenfalls ein Ablösen von Verschmutzungen bewirkt, zumindest aber begünstigt.

In besonders vorteilhafter Weise werden die Fremdkörper ausschließlich mechanisch von den Teilen bzw. PET-Flaschen entfernt. Die mechanische Beanspruchung kann eine Deformation der Teile bedeuten, so dass sich die Fremdkörper aufgrund der Deformation der Teile von diesen lösen. Im Konkreten ist es denkbar, dass die Teile durch Biegen, Stauchen und/oder Dehnen deformiert werden, wodurch ein Lösen der Fremdkörper von den Teilen erfolgt.

Grundsätzlich ist es auch möglich, dass die Fremdkörper unter zusätzlicher Einwirkung einer Flüssigkeit oder von Dampf von den Teilen entfernt werden, wobei auf jeden Fall eine mechanische Einwirkung auf die Teile stattfindet. Auch ist es denkbar, dass das Entfernen der Fremdkörper unter zusätzlicher Einwirkung von Wärme oder Kälte erfolgt, um nämlich das Lösen der Fremdkörper von den Teilen zu begünstigen.

In ganz besonders vorteilhafter Weise werden die Fremdkörper von den Teilen bzw. PET-Flaschen regelrecht abgeschlagen. Dabei kann eine Zerkleinerung der Fremdkörper stattfinden, was das Trennen der Fremdkörper von den zu recycelnden Teilen begünstigt.

Sollten sich in den zu recycelnden Flaschen noch irgendwelche Restbestände an Flüssigkeit befinden, wäre es von Vorteil, die Flüssigkeit aus den Flaschen auslaufen zu lassen. Dazu könnten die Teile bzw. Flaschen im Rahmen der mechanischen Beanspruchung zumindest geringfügig angeritzt oder angeschnitten, jedoch nicht zerkleinert werden. Das Anritzen der Teile hat den Vorteil, dass beliebige Flüssigkeit nach außerhalb gelangt, ohne dass die Gefahr einer vorzeitigen Zerkleinerung der PET-Flaschen droht, wodurch eine Trennung zwischen dem PET-Material und den Fremdkörpern erschwert wäre.

Die zu recycelnden Teile bzw. Flaschen werden nach dem Sammeln üblicherweise zu Ballen verdichtet und entsprechend zusammengepresst. In dieser Form wird das zu recycelnde Material dem Recycling-Prozess zugeführt. Zur erfindungsgemäßen Vorreinigung wird der Ballen aufgelöst bzw. werden die Teile vereinzelt und in vereinzelter Form dem Vorreinigungsprozess zugeführt. Entsprechend erfolgt die Entfernung der Fremdkörper nach einer Auflösung des Ballens bzw. nach einer Vereinzelung der Teile, wodurch der Vorreinigungsprozess ganz erheblich begünstigt ist.

Des Weiteren ist es von ganz besonderem Vorteil, wenn die Entfernung der Fremdkörper über eine vorgebbare Verweilzeit und/oder eine vorgebbare Beanspruchungsintensität erfolgt. Beide Parameter sind einstellbar und lassen sich - möglichst in Abhängigkeit voneinander und in Abhängigkeit vom Material bzw. vom Verschmutzungsgrad - einstellen und optimieren.

Grundsätzlich ist es nicht auszuschließen, dass während des Vorreinigungsprozesses kleine Teile der PET-Flaschen von diesen abgetrennt und gemeinsam mit den Fremdkörpern separiert werden, wenngleich ausschließlich die Fremdkörper zu separieren sind. Insoweit ist es von Vorteil, wenn die von den Teilen gelösten und separierten Fremdkörper nebst Kunststoffteile einem abermaligen Trennprozess zugeführt werden, wonach Rest-Kunststoffteile der PET-Flaschen abermals getrennt und dem Recycling-Prozess zugeführt werden. Der tatsächliche Schmutz, d.h. die von den Flaschen gelösten Fremdkörper, beispielsweise Etiketten, Metall, etc., werden dann entsorgt oder einem weiteren Recycling-Prozess zugeführt.

An dieser Stelle sei angemerkt, dass dem erfindungsgemäßen Verfahren der eigentliche Recycling-Prozess folgt, wobei die von Fremdkörpern befreiten Teile bzw. Flaschen vorzugsweise über eine Fördereinrichtung dem weiteren Recycling-Prozess zugeführt werden, der dann in einer für sich bekannten Weise vollzogen wird.

Die erfindungsgemäße Vorrichtung umfasst ein Gehäuse mit einer Kammer zur Aufnahme der Teile bzw. PET-Flaschen, wobei in der Kammer Mittel zur mechanischen Beaufschlagung der Teile sowie Mittel zum Trennen der von den Teilen losgelösten Fremdkörper sowie zum Abführen der Fremdkörper und der Teile auf separaten Pfaden vorgesehen sind.

Mit anderen Worten werden die mechanisch gelösten Fremdkörper beispielsweise über ein Lochblech mit im Durchmesser geeignet definierten Löchern einer Fördereinrichtung zugeführt, möglichst unterhalb des Gehäuses bzw. der Kammer. Die Fremdkörper könnten dort über eine Förderschnecke in eine abermalige Trenneinrichtung gelangen, beispielsweise in einen Zyklon. Dort erfolgt eine abermalige Trennung der Fremdkörper von Rest-Kunststoffteilen, die dann wieder dem Recycling-Prozess zugeführt werden.

Die zur Vorreinigung dienende Kammer könnte als Zentrifugaleinrichtung oder Trommel ausgeführt sein. In dem Gehäuse bzw. in der Kammer ist ein Rotor mit Beaufschlagungsmitteln vorgesehen. Grundsätzlich ist es von Vorteil, wenn der innen angeordnete Rotor gegenüber dem Gehäuse dreht. Eine umgekehrte Funktion ist denkbar.

Die Beaufschlagungsmittel können unterschiedlich ausgebildet sein, beispielsweise als Stäbe, Flügel, Paddel oder dgl. Auch ist es denkbar, dass die Beaufschlagungsmittel Messer umfassen, wobei die Stäbe, Flügel, Paddel oder dgl. zumindest teilweise mit Messern bestückt sein können, die zum Anritzen der Kunststoffteile bzw. der PET-Flaschen dienen. An dieser Stelle sein angemerkt, dass es von ganz besonderem Vorteil ist, wenn im Rahmen der Vorreinigung keine Zerkleinerung der Teile bzw. PET-Flaschen stattfindet. Entsprechend sind die Messer derart auszulegen, dass die Flaschen allenfalls angeritzt, nicht jedoch zerschnitten werden.

Es gibt nun verschiedene Möglichkeiten, die Lehre der vorliegenden Erfindung in vorteilhafter Weise auszugestalten und weiterzubilden. Dazu ist auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht ein Ausführungsbeispiel einer erfindungsgemäßen Vorrichtung,

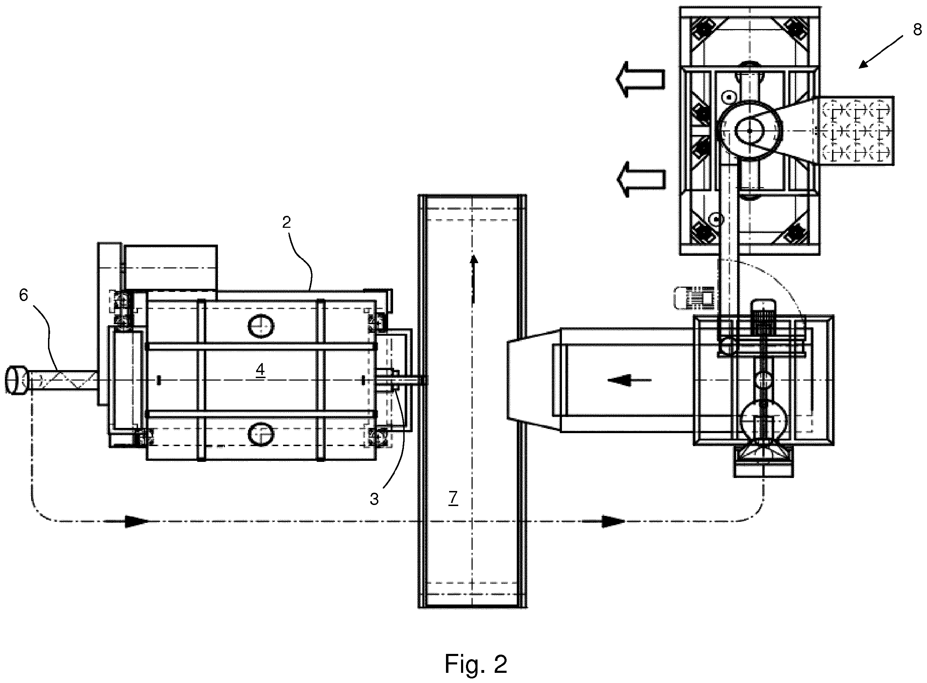

- Fig. 2: in einer schematischen Draufsicht den Gegenstand aus Fig. 1,
- Fig. 3: in einer schematischen Seitenansicht die Trennung etwaiger Rest-Kunststoffteile von den Fremdkörpern und
- Fig. 4a: in einem schematischem Diagramm den Ablauf des erfindungsgemäßen Verfahrens im Rahmen einer ersten Variante,
- Fig. 4b: in einem schematischen Diagramm den Ablauf des erfindungsgemäßen Verfahrens im Rahmen einer zweiten Variante,
- Fig. 5: in einer schematischen Seitenansicht ein Ausführungsbeispiel eines mit Werkzeugen bestückten Rotors,
- Fig. 6: in einer schematischen Stirnansicht den Gegenstand aus Fig. 5 und
- Fig. 7: in einer schematischen Ansicht, gegenüber den Fig. 5 und 6 vergrößert, ein auf einer Halteplatte angeordnetes Werkzeug des Rotors.

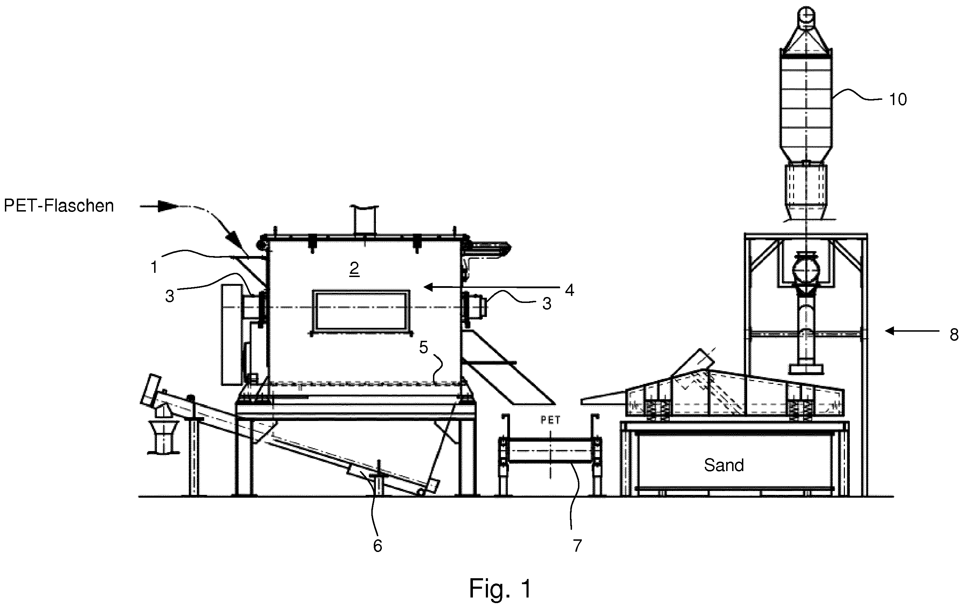

Fig. 1 zeigt in einer schematischen Seitenansicht ein Ausführungsbeispiel einer erfindungsgemäßen Vorrichtung, durch die sich das erfindungsgemäße Verfahren beschreiben lässt.

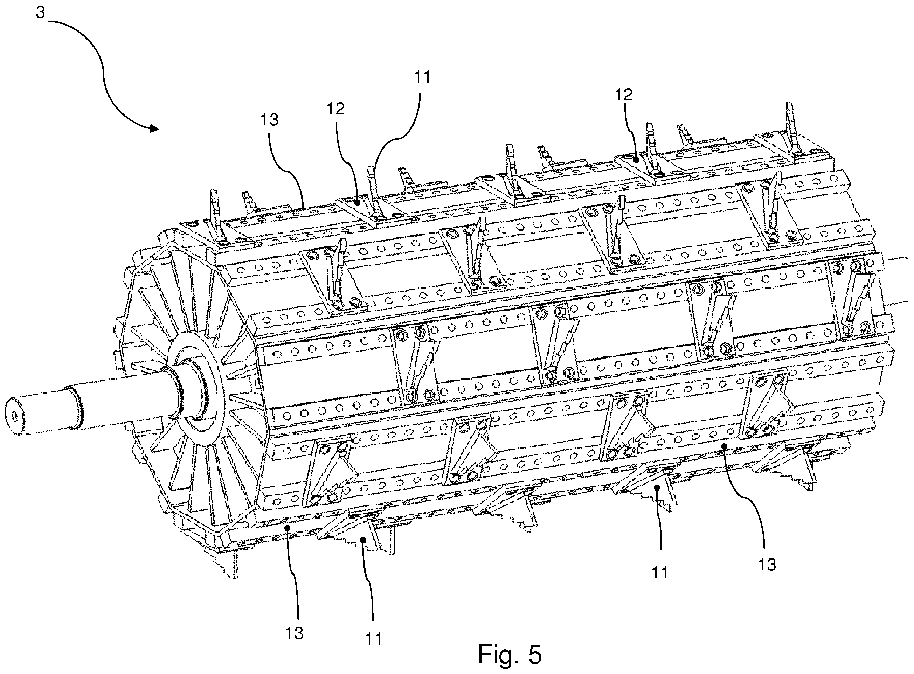

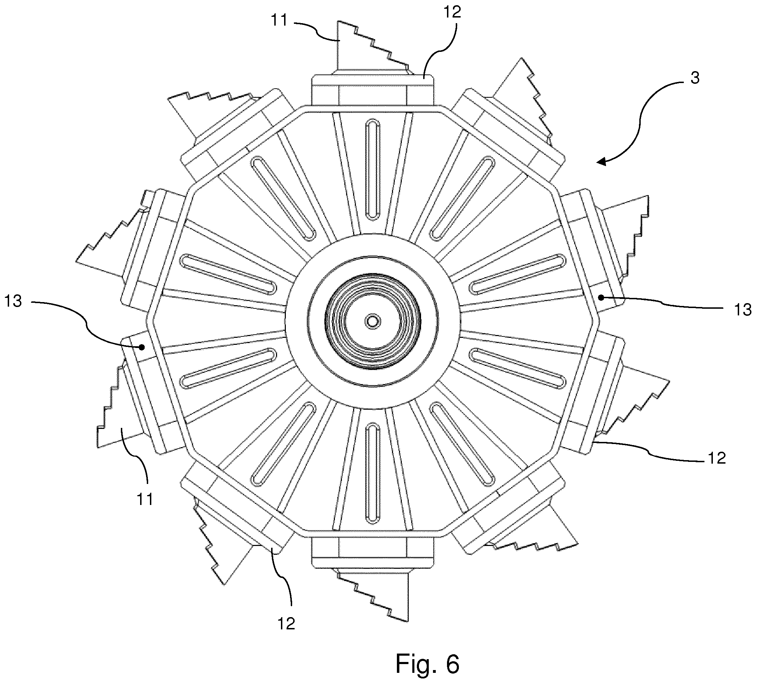

Bei dem hier gewählten Ausführungsbeispiel geht es um das Recyceln sogenannter PET-Flaschen, die der erfindungsgemäßen Vorrichtung vorzugsweise vereinzelt zugeführt werden. Die Zuführung erfolgt bei dem in Fig. 1 gezeigten Ausführungsbeispiel über einen Zuführschacht 1. Statt der Vorkehrung eines Zuführschachts könnte eine Zwangsbeschickung mit einer oder mehreren Förderschnecken vorgesehen sein, um nämlich den Durchsatz zu begünstigen. Außerdem eignet sich die Zwangsbeschickung, beispielsweise die sogenannte Schneckenzufuhr, insbesondere im Rahmen einer Rotorvariante entsprechend den Fig. 5 und 6, wonach diese unter Zugrundelegung einer Zwangsbeschickung besonders effektiv funktioniert.

Es sei angemerkt, dass die erfindungsgemäße Vorrichtung in idealer Weise trocken arbeitet, nämlich aufgrund der hier realisierten konstruktiven Merkmale.

Die in Fig. 1 gezeigte Vorrichtung umfasst ein Gehäuse 2 mit einer darin befindlichen Kammer. Innerhalb des Gehäuses 2 bzw. in der Kammer ist ein Rotor 3 angeordnet, der mit Schaufeln 4 bzw. Werkzeugen 11 ausgestattet ist. An den PET-Flaschen befindlicher Schmutz bzw. daran befindliche Fremdkörper, beispielsweise Etiketten, werden von den Schaufeln 4 bzw. Werkzeugen 11 regelrecht abgeschlagen.

Über ein Lochblech 5 gelangen die abgeschlagenen Fremdkörper auf bzw. in einen Schraubenförderer 6 und werden von dort einer weiteren Separierung zugeführt.

Die von den Fremdkörpern befreiten PET-Flaschen werden von der Vorrichtung bzw. aus dem Gehäuse 2 heraus auf ein Förderband 7 verbracht und von dort aus dem weiteren Recycling-Prozess zugeführt.

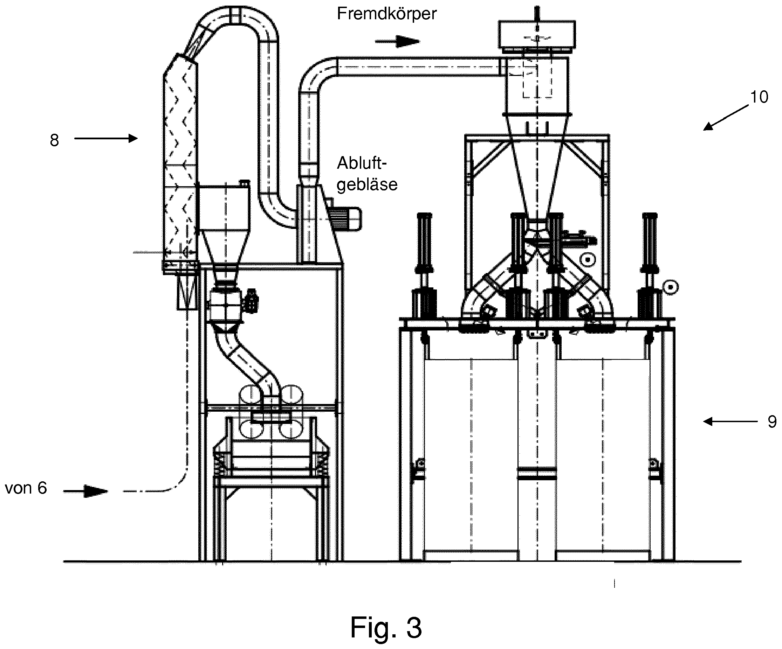

Die von den PET-Flaschen gelösten Fremdkörper gelangen über den Schraubenförderer 6 in eine davon unabhängige Trenneinrichtung 8, die einen Zick-Zack-Kanal und einen Zyklon 10 umfassen kann. Dort werden Rest-Kunststoffteile, die von den PET-Flaschen unbeabsichtigt abgeschlagen worden sind, von dem Fremdkörpern getrennt und dem Förderband 7 zugeführt, so dass auch diese Teile zum Recyceln zur Verfügung stehen. Der Rest, d.h. die Etiketten und der Schmutz bzw. die Fremdkörper, werden dann entsprechend der Darstellung in Fig. 3 einer Abfallstation 9 zugeführt, wobei auch hier eine Trennung vollzogen werden kann.

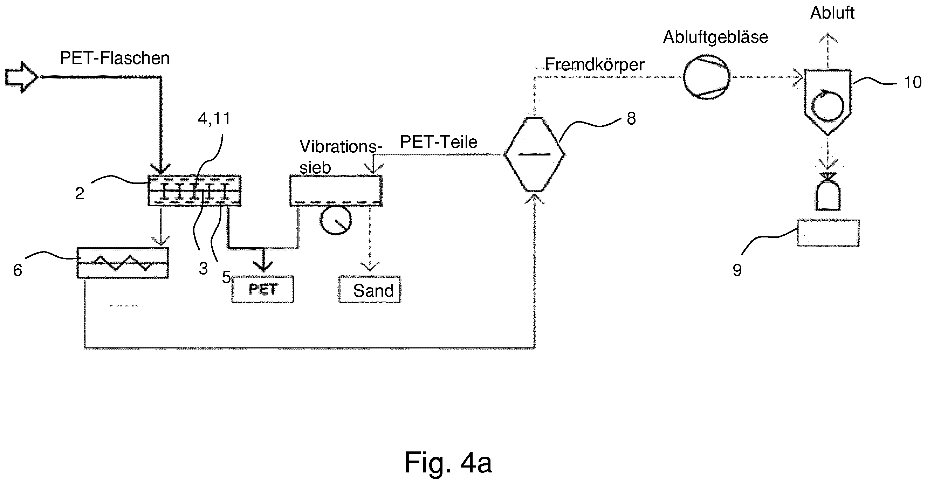

Fig. 4a zeigt in einem schematischen Diagramm den Ablauf des erfindungsgemäßen Verfahrens, wobei die zu recycelnden Teile bzw. PET-Flaschen - vereinzelt - der erfindungsgemäßen Vorrichtung und somit dem Gehäuse 2 zugeführt werden. In dem Gehäuse 2 ist der Rotor 3 mit den Schaufeln 4 angeordnet, wie dies in Fig. 4a angedeutet ist.

Abgeschlagene Etiketten, Schmutz, etc. gelangen vorzugsweise durch das Lochblech 5 hindurch über einen Schraubenförderer 6 zu einer weiteren Trenneinrichtung 8, die über Schwerkraft arbeiten kann. Davon getrennte Kunststoffteile lassen sich dem Recycling-Prozess zuführen.

Die von den Fremdkörpern befreiten PET-Flaschen werden aus dem Gehäuse 2 heraus auf das Förderband 7 gefördert und von dort aus dem weiteren Recycling-Prozess zugeführt. Wie bereits zuvor erwähnt, gelangen losgelöste Fremdkörper nebst Rest-Kunststoffteile über den Schraubenförderer 6 zu der weiteren Trenneinrichtung 8, wobei von dort aus die Rest-Kunststoffteile nach weiterer Trennung ebenfalls dem Förderband 7 und somit dem Recycling-Prozess zugeführt werden.

Die losgelösten Fremdkörper werden in konventioneller Weise vorzugsweise über einen Zyklon 10 einer Abfallstation 9 zugeführt, wobei dort ebenfalls eine sortenreine Trennung möglich aber nicht zwingend erforderlich ist.

An dieser Stelle sei angemerkt, dass die erfindungsgemäße Vorrichtung ganz ohne Sieb bzw. Lochblech ausgeführt sein kann, wonach nämlich die Fraktion innerhalb einer geschlossenen Trommel bzw. innerhalb eines geschlossenen Gehäuses 3 aus ungelochtem Blech durchgeführt wird. Nach dem Gerät bzw. dem Gehäuse 2 würde dann eine Trennung in Gut- und Schlechtfraktion stattfinden, um dort nämlich Flaschen und Etiketten bzw. Schmutz zu scheiden.

Auch ist es denkbar, dass nach der Vorrichtung anstelle einer konvertierenden Windsichtung eine Siebmaschine angeordnet ist, die zum Abzug der sogenannten Leichtfraktion besaugt wird. Eine solche Einrichtung kann eine Haube über der Siebmaschine umfassen, wobei in der Haube ein Absauganschluss vorgesehen ist. Letztendlich handelt es sich auch hier um eine Art Windsichter mit automatischer Absaugung.

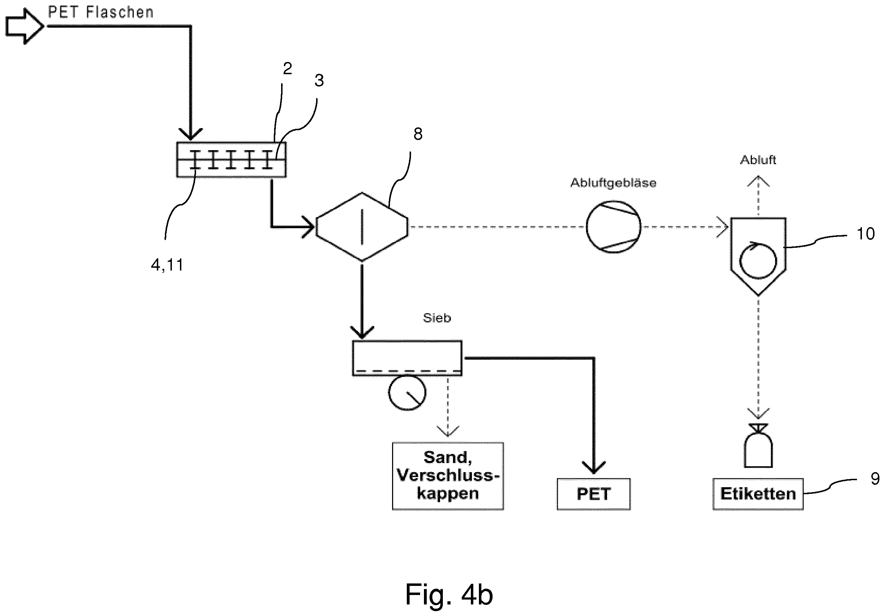

Fig. 4b zeigt in einem schematischen Diagramm eine weitere Variante eines möglichen Ablaufs des erfindungsgemäßen Verfahrens, wobei dort die mit Schmutz, Etiketten oder dergleichen behafteten PET-Flaschen der erfindungsgemäßen Vorrichtung zugeführt werden, nämlich dem Gehäuse 2, in dem ein Rotor 3 mit geeigneten Werkzeugen 11 angeordnet ist. Der Rotor 3 dreht relativ zu dem Gehäuse 2. Grundsätzlich ist eine Relativbewegung zwischen dem Rotor 3 und dem Gehäuse 2 erforderlich, ganz gleich, welches Bauteil sich dabei aktiv dreht.

Innerhalb des Gehäuses 2, auch Außentrommel genannt, werden Etiketten und Verschlusskappen von der eigentlichen PET-Flasche getrennt, ohne den Flaschenkopf zu zerstören bzw. abzuschlagen, wonach eine Separierung von Verschlusskappe und Flaschenhals nur noch mit erheblichem Aufwand oder gar nicht möglich wäre.

Jedenfalls gelangt das Zerkleinerungsgut von der Vorrichtung bzw. dem Gehäuse 2 in eine als Separierungsstufe zu verstehende Trenneinrichtung 8, die beispielsweise über Schwerkraft arbeiten kann.

In Bezug auf den im Gehäuse 2 angeordneten Rotor 3 ist wesentlich, dass der Rotor 3 in Kombination mit seinen Werkzeugen 11 (siehe Fig. 5, 6 und 7) und der Außentrommel bzw. dem Gehäuse 2 in der Lage ist, Etiketten und Verschlusskappen von den Behältern bzw. PET-Flaschen zu entfernen, ohne hierbei die Flaschenhälse zu zerstören. Dies ist von ganz besonderer Bedeutung, zumal eine Zerstörung der Behälterhälse zu einem Materialverlust im Recyclingprozess führen würde, da nämlich die Flaschenhälse mit den Verschlusskappen separiert werden müssten.

Bevorzugt ist die Außentrommel bzw. das Gehäuse 2 drehfest, wobei der Rotor 3 dreht. Eine umgekehrte Kinematik ist denkbar. Regelmäßig sind die Achsen von Gehäuse 2 bzw. Außentrommel und Rotor 3 koaxial angeordnet. Eine exzentrische Anordnung des Rotors 3 innerhalb des Gehäuses 2 ist denkbar bzw. kann sogar von Vorteil sein, um nämlich innerhalb des Gehäuses 2 Zonen mit unterschiedlicher Einwirkungsintensität in Bezug auf die Flaschen zu definieren.

Die in Fig. 4b gezeigte Trenneinrichtung 8 bzw. Separationsstufe dient zur Abscheidung der vereinzelten Etiketten noch vor der Siebmaschine bzw. dem Sieb, so dass dem Sieb lediglich das eigentliche Flaschenmaterial nebst Verschlusskappen zugeführt wird.

Fig. 5 zeigt in einer schematischen Seitenansicht ein Ausführungsbeispiel eines Rotors 3, wie er in dem Gehäuse 2 bzw. in der durch das Gehäuse 2 gebildeten Außentrommel angeordnet sein kann. Bei dem in Fig. 5 gewählten Ausführungsbeispiel ist der Rotor 3 im Querschnitt eckig ausgeführt, kann jedoch auch - nach Bedarf - entlang dem Umfang rund sein.

Fig. 5 zeigt deutlich, dass der Rotor 3 Befestigungsleisten 13 umfasst, die paarweise zur Anbringung der auf Halteplatten 12 angeordneten Werkzeuge 11 dienen. Die Werkzeuge 11 sind derart angeordnet, dass sie bei definierter Drehrichtung in Bezug auf das Zerkleinerungsgut einen Drall und somit eine Förderrichtung definieren. Bei dem in Fig. 5 gezeigten Ausführungsbeispiel ist die Drehrichtung im Uhrzeigersinn zu verstehen.

Der in Fig. 5 gezeigte Rotor 3 dreht mit einer Relativbewegung zum Gehäuse 2, wobei das Gehäuse 2 bzw. die durch das Gehäuse 2 gebildete Außentrommel drehfest ist. Die Achsen von Rotor 3 und Gehäuse 2 sind koaxial angeordnet.

Fig. 6 zeigt den Gegenstand aus Fig. 5 in einer Stirnansicht, wobei dort besonders gut die eckige Ausgestaltung des Rotors 3 und die gestufte Ausführung der Werkzeuge 11 zu erkennen ist. Auch lässt Fig. 6 deutlich erkennen, dass die Werkzeuge 11 auf Halteplatten 12 montiert sind, die wiederum auf den Befestigungsleisten 13 sitzen. Die Halteplatten 12 sind vorzugsweise auf den Befestigungsleisten 13 verschraubt. Ein Austausch einzelner Werkzeuge 11 bzw. Halteplatten 12 ist jederzeit möglich.

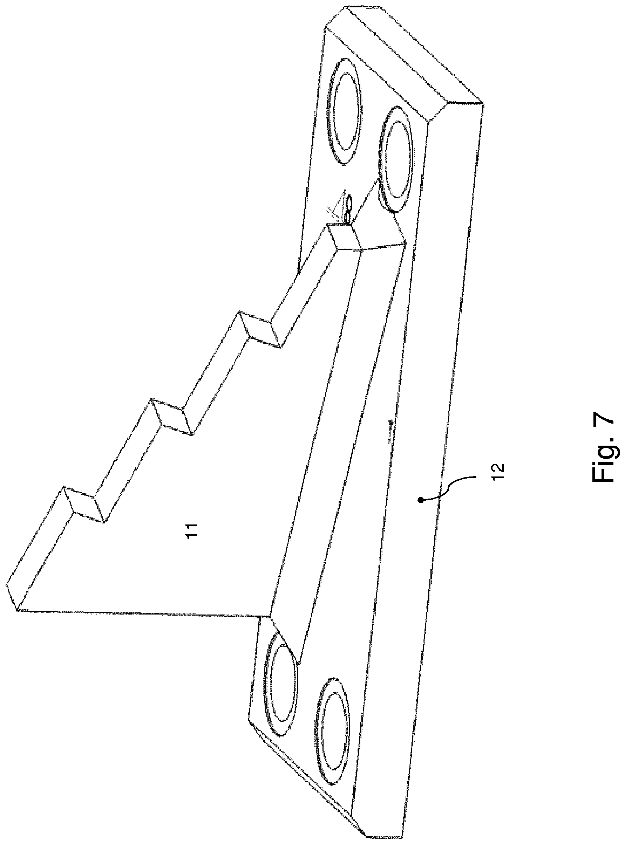

Fig. 7 zeigt im Detail, vergrößert, eine Halteplatte 12 mit darauf angeordnetem Werkzeug 11, wobei das Werkzeug 11 abgewinkelt angeordnet ist, woraus sich beim Drehen des Rotors 3 die Förderrichtung des Materials ergibt.

Die im Gehäuse 2 bzw. am Rotor 3 vorgesehenen Beaufschlagungsmittel - Werkzeuge 4,11 - können am Rotor 3 fest angebracht oder dort in der Position und im Winkel verstellbar sein, um auf die Verweilzeit der zu behandelnden Teile in der Vorrichtung Einfluss nehmen zu können. Im Konkreten können die Beaufschlagungsmittel in tangentialer Richtung starr oder beweglich am Rotor 3 befestigt sein. Der Rotor 3 selbst kann in dem Gehäuse 2 bzw. in der Trommel zentrisch oder exzentrisch zur Trommelachse angeordnet sein, wobei die Trommel bzw. das Gehäuse 2 zylindrisch oder konisch zur Drehachse des Rotors 3 ausgebildet sein kann.

Ebenso ist es denkbar, dass die Trommel oder das Gehäuse 2 auf der Innenseite mit Elementen bestückt ist, welche die Flugbahn der aufgegebenen Teile beeinflussen.

Der Materialeintrag in die Vorrichtung, d. h. in das Gehäuse 2 hinein, ist vorzugsweise tangential zur Umfangbewegung des Rotors 3 in Richtung der Drehbewegung des Rotors 3 angeordnet.

Der Materialaustrag aus der Vorrichtung bzw. aus dem Gehäuse 2 ist vorzugsweise tangential zur Umfangsbewegung des Rotors 3 in Richtung der Drehbewegung des Rotors 3 ausgerichtet.

Des Weiteren sei angemerkt, dass die erfindungsgemäße Vorrichtung nicht nur zur bloßen Behandlung der Teile dient, vielmehr eine weitere Funktion innehat, nämlich das Auflösen von Ballen und Briketts und diese mit der eigentlichen Funktion der Vorreinigung vereint.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Lehre lediglich zur Erörterung der beanspruchten Lehre dient, diese jedoch nicht auf das Ausführungsbeispiel einschränkt.

### Bezugszeichenliste

- 1: Zuführschacht
- 2: Gehäuse, Außentrommel
- 3: Rotor
- 4: Schaufel
- 5: Lochblech
- 6: Schraubenförderer
- 7: Förderband
- 8: Trenneinrichtung, Separationsstufe
- 9: Abfallstation
- 10: Zyklon
- 11: Werkzeug
- 12: Halteplatte für das Werkzeug
- 13: Befestigungsleiste

## Patentansprüche

1. Verfahren zur Vorreinigung von gebrauchten Kunststoffflaschen im Rahmen eines Recycling-Prozesses, wobei den Kunststoffflaschen zu entfernende Fremdkörper anhaften, vorzugsweise zum Entfernen von Etiketten und/oder Verschmutzungen an den gebrauchten Kunststoffflaschen,
wobei die Fremdkörper durch mechanische Beanspruchung der Kunststoffflaschen in einem Gehäuse (2) mit darin angeordnetem Rotor (3) von diesen entfernt werden, wobei Gehäuse (2) und Rotor (3) relativ zueinander drehen,
**dadurch gekennzeichnet, dass** durch den gestufte Werkzeuge (11) umfassenden Rotor (3) in Kombination mit dem Gehäuse (2) Etiketten und Verschlusskappen von den Kunststoffflaschen entfernt werden, wobei die Werkzeuge (11) auf Halteplatten (12) montiert sind, die wiederum auf Befestigungsleisten (13) sitzen.

2. Verfahren nach Anspruch 1, **dadurch gekennzeichnet, dass** die Fremdkörper ausschließlich mechanisch von den Teilen entfernt werden.

3. Verfahren nach Anspruch 1 oder 2, **dadurch gekennzeichnet, dass** die Fremdkörper durch Deformation der Teile von diesen entfernt werden,
insbesondere durch Biegen, Stauchen und/oder Dehnen der Teile.

4. Verfahren nach Anspruch 1 und ggf. nach Anspruch 3, **dadurch gekennzeichnet, dass** die Fremdkörper unter zusätzlicher Einwirkung einer Flüssigkeit von den Teilen entfernt werden.

5. Verfahren nach Anspruch 1 und ggf. nach Anspruch 3 oder 4, **dadurch gekennzeichnet, dass** die Fremdkörper unter zusätzlicher Einwirkung von Wärme oder Kälte von den Teilen entfernt werden.

6. Verfahren nach einem der Ansprüche 1 bis 5, **dadurch gekennzeichnet, dass** die Fremdkörper von den Teilen abgeschlagen werden.

7. Verfahren nach einem der Ansprüche 1 bis 6, **dadurch gekennzeichnet, dass** die Teile, insbesondere Behältnisse bzw. Flaschen, im Rahmen der mechanischen Beanspruchung zumindest geringfügig angeritzt oder angeschnitten werden.

8. Verfahren nach einem der Ansprüche 1 bis 7, **dadurch gekennzeichnet, dass** die Teile zu Ballen verdichtet bereitgestellt werden und dass die Entfernung der Fremdkörper nach einer Auflösung des Ballens bzw. nach einer Vereinzelung der Teile erfolgt.

9. Verfahren nach einem der Ansprüche 1 bis 8, **dadurch gekennzeichnet, dass** die Entfernung der Fremdkörper über eine vorgebbare Verweilzeit und/oder eine vorgebbare Beanspruchungsintensität erfolgt.

10. Verfahren nach einem der Ansprüche 1 bis 9, **dadurch gekennzeichnet, dass** die von den Teilen entfernten Fremdkörper, ggf. mit kleinen Kunststoffteilen, separiert werden,
wobei die von den Teilen gelösten und separierten Fremdkörper einer abermaligen Separierung zur Trennung unterschiedlicher Materialien, ggf. kleiner Kunststoffteile, zugeführt werden können und wobei ggf.
die Kunststoffteile dem Recycling-Prozess an geeigneter Stelle zugeführt werden.

11. Vorrichtung zur Vorreinigung von gebrauchten Kunststoffflaschen im Rahmen eines Recycling-Prozesses, wobei an den gebrauchten Kunststoffflaschen zu entfernende Fremdkörper anhaften, vorzugsweise zum Entfernen von Etiketten und/oder Verschmutzungen an den gebrauchten Kunststoffflaschen,
umfassend ein Gehäuse (2) mit einer Kammer zur Aufnahme der Teile, wobei in der Kammer ein Rotor (3) mit Werkzeugen (11) zur mechanischen Beaufschlagung der Teile sowie Mittel zum Trennen der von den Teilen losgelösten Fremdkörper sowie zum Abführen der Fremdkörper und Teile auf separaten Pfaden vorgesehen sind, wobei Gehäuse (2) und Rotor (3) relativ zueinander drehen,
**dadurch gekennzeichnet, dass** die Werkzeuge (11) gestuft ausgebildet und auf Halteplatten (12) montiert sind und dass die Halteplatten (12) auf Befestigungsleisten (13) sitzen.

12. Vorrichtung nach Anspruch 11, **dadurch gekennzeichnet, dass** das Gehäuse (2) mit der darin ausgebildeten Kammer als Zentrifugaleinrichtung ausgeführt ist.

13. Vorrichtung nach Anspruch 11 oder 12, **dadurch gekennzeichnet, dass** das Gehäuse (2) mit der Kammer als Trommel ausgeführt ist.

14. Vorrichtung nach einem der Ansprüche 11 bis 13, **dadurch gekennzeichnet, dass** der Rotor (3) Beaufschlagungsmittel aufweist,
wobei
die Beaufschlagungsmittel als Stäbe, Flügel, Paddel oder dgl. ausgebildet sein können.

15. Vorrichtung nach der Anspruch 14, **dadurch gekennzeichnet, dass** die Beaufschlagungsmittel Messer umfassen und/oder
dass die Stäbe, Flügel, Paddel oder dgl. zumindest teilweise mit Messern bestückt sind.

## Claims

1. Method for pre-cleaning used plastics bottles in the context of a recycling process, wherein foreign bodies which are intended to be removed adhere to the plastics bottles, preferably for removing labels and/or contamination on the used plastics bottles,
wherein the foreign bodies are removed from the plastics bottles by means of mechanical loading of the plastics bottles in a housing (2) with a rotor (3) arranged therein, wherein the housing (2) and rotor (3) rotate relative to each other,
**characterised in that**, as a result of the rotor (3) which comprises stepped tools (11) in combination with the housing (2), labels and closure caps are removed from the plastics bottles, wherein the tools (11) are mounted on retention plates (12) which in turn rest on securing bars (13).

2. Method according to claim 1, **characterised in that** the foreign bodies are exclusively mechanically removed from the components.

3. Method according to claim 1 or 2, **characterised in that** the foreign bodies are removed from the components by means of deformation of the components, in particular by means of bending, compression and/or expansion of the components.

4. Method according to claim 1 and where applicable according to claim 3, **characterised in that** the foreign bodies are removed from the components with the additional action of a fluid.

5. Method according to claim 1 and where applicable according to claim 3 or 4, **characterised in that** the foreign bodies are removed from the components with the additional action of heat or cold.

6. Method according to any one of claims 1 to 5, **characterised in that** the foreign bodies are knocked off the components.

7. Method according to any one of claims 1 to 6, **characterised in that** the components, in particular containers or bottles, are at least slightly slit or cut in the context of the mechanical loading.

8. Method according to any one of claims 1 to 7, **characterised in that** the components are provided in a state compressed into balls and **in that** the removal of the foreign bodies is carried out after a separation of the ball or after a separation of the components.

9. Method according to any one of claims 1 to 8, **characterised in that** the removal of the foreign bodies is carried out over a predeterminable dwell time and/or a predeterminable stress intensity.

10. Method according to any one of claims 1 to 9, **characterised in that** the foreign bodies which are removed from the components are separated, where applicable with small plastics material components,
wherein the foreign bodies which are released and separated from the components can be supplied to a repeated separation operation in order to separate different materials, where applicable small plastics material components, and wherein where applicable the plastics material components are supplied to the recycling process at the appropriate location.

11. Device for pre-cleaning used plastics bottles in the context of a recycling process, wherein foreign bodies which are intended to be removed adhere to the used plastics bottles, preferably for removing labels and/or contamination on the used plastics bottles,
comprising a housing (2) having a chamber for receiving the components, wherein there are provided in the chamber a rotor (3) with tools (11) for mechanically acting on the components, and means for separating the foreign bodies which have been released from the components and for discharging the foreign bodies and components on separate paths, wherein the housing (2) and rotor (3) rotate relative to each other, **characterised in that** the tools (11) are constructed in a stepped manner and are mounted on retention plates (12) and **in that** the retention plates (12) rest on securing bars (13).

12. Device according to claim 11, **characterised in that** the housing (2) is constructed with the chamber which is constructed therein as a centrifugal device.

13. Device according to claim 11 or 12, **characterised in that** the housing (2) is constructed with the chamber as a drum.

14. Device according to any one of claims 11 to 13, **characterised in that** the rotor (3) has action means,
wherein
the action means may be constructed as rods, wings, paddles or the like.

15. Device according to claim 14, **characterised in that** the action means comprise blades and/or
**in that** the rods, wings, paddles or the like are at least partially provided with blades.

## Revendications

1. Dispositif de pré-nettoyage de bouteilles en matière plastique usagées dans le cadre d'un processus de recyclage, des corps étrangers à enlever adhérant aux bouteilles en matière plastique, de préférence pour l'enlèvement d'étiquettes et/ou de saletés sur les bouteilles en matière plastique usagées,
les corps étrangers étant enlevés des bouteilles en matière plastique par contrainte mécanique exercée sur celles-ci dans un carter (2) avec un rotor (3) qui y est disposé,
le carter (2) et le rotor (3) tournant l'un par rapport à l'autre,
**caractérisé en ce que** des étiquettes et des capuchons de fermeture sont enlevés des bouteilles en matière plastique par le rotor (3) comprenant des outils (11) étagés en combinaison avec le carter (2), les outils (11) étant montés sur des plaques de maintien (12) qui reposent à leur tour sur des baguettes de fixation (13).

2. Procédé selon la revendication 1, **caractérisé en ce que** les corps étrangers sont enlevés des pièces exclusivement de façon mécanique.

3. Procédé selon la revendication 1 ou 2, **caractérisé en ce que** les corps étrangers sont enlevés des pièces par déformation de celles-ci,
en particulier par flexion, refoulement et/ou étirement des pièces.

4. Procédé selon la revendication 1 et éventuellement selon la revendication 3, **caractérisé en ce que** les corps étrangers sont enlevés des pièces avec une action supplémentaire d'un liquide.

5. Procédé selon la revendication 1 et éventuellement selon la revendication 3 ou 4, **caractérisé en ce que** les corps étrangers sont enlevés des pièces avec une action supplémentaire de chaleur ou de froid.

6. Procédé selon l'une des revendications 1 à 5, **caractérisé en ce que** les corps étrangers sont enlevés des pièces par des chocs.

7. Procédé selon l'une des revendications 1 à 6, **caractérisé en ce que** les pièces, en particulier des récipients ou respectivement des bouteilles, sont au moins faiblement entaillées ou découpées dans le cadre de la contrainte mécanique.

8. Procédé selon l'une des revendications 1 à 7, **caractérisé en ce que** les pièces sont fournies sous forme compactée en balles et **en ce que** l'enlèvement des corps étrangers s'effectue après une désagrégation de la balle ou respectivement après une dissociation des pièces.

9. Procédé selon l'une des revendications 1 à 8, **caractérisé en ce que** l'enlèvement des corps étrangers s'effectue pendant un temps de séjour pouvant être spécifié et/ou par le biais d'une intensité de contrainte pouvant être spécifiée.

10. Procédé selon l'une des revendications 1 à 9, **caractérisé en ce que** les corps étrangers enlevés des pièces, éventuellement avec des petites pièces de matière plastique, sont séparés,
les corps étrangers détachés et séparés des pièces pouvant être conduits à une nouvelle disjonction pour la séparation de différents matériaux, éventuellement de petites pièces de matière plastique, et éventuellement
les pièces de matière plastique étant conduites au processus de recyclage à un endroit approprié.

11. Dispositif de pré-nettoyage de bouteilles en matière plastique usagées dans le cadre d'un processus de recyclage, des corps étrangers à enlever adhérant aux bouteilles en matière plastique usagées, de préférence pour l'enlèvement d'étiquettes et/ou de saletés sur les bouteilles en matière plastique usagées,
comprenant un carter (2) avec une chambre pour la réception des pièces, dans lequel il est prévu dans la chambre un rotor (3) avec des outils (11) pour soumettre les pièces à une sollicitation mécanique ainsi que des moyens de séparation des corps étrangers détachés des pièces, ainsi que pour l'évacuation des corps étrangers et des pièces sur des chemins séparés,
le carter (2) et le rotor (3) tournant l'un par rapport à l'autre,
**caractérisé en ce que** les outils (11) sont constitués de façon étagée et sont montés sur des plaques de maintien (12), et **en ce que** les plaques de maintien (12) reposent sur des baguettes de fixation (13).

12. Dispositif selon la revendication 11, **caractérisé en ce que** le carter (2) avec la chambre qui est constituée à l'intérieur est réalisé en tant que système centrifuge.

13. Dispositif selon la revendication 11 ou 12, **caractérisé en ce que** le carter (2) avec la chambre est réalisé en tant que tambour.

14. Dispositif selon l'une des revendications 11 à 13, **caractérisé en ce que** le rotor (3) présente des moyens de sollicitation,
les moyens de sollicitation pouvant être constitués en tant que barres, ailettes, pales ou similaires.

15. Dispositif selon la revendication 14, **caractérisé en ce que** les moyens de sollicitation comprennent des lames
et/ou **en ce que** les barres, ailettes, pales ou similaires sont équipées au moins partiellement de lames.
